(19) Europäisches Patentamt
European Patent Office
Office européen des brevets

(11) Veröffentlichungsnummer: **0 469 175 A1**

(12) **EUROPÄISCHE PATENTANMELDUNG**

(21) Anmeldenummer: **90114888.2**

(51) Int. Cl.[5]: **C08G 69/44**

(22) Anmeldetag: **02.08.90**

(43) Veröffentlichungstag der Anmeldung:
**05.02.92 Patentblatt 92/06**

(84) Benannte Vertragsstaaten:
**BE CH DE FR GB IT LI NL**

(71) Anmelder: **Akademie der Wissenschaften der DDR**
**Otto-Nuschke-Strasse 22/23**
**O-1086 Berlin(DE)**

(72) Erfinder: **Leistner, Dirk, Dipl.-Chem.**
**Elsa-Brandström-Strasse 2**
**O-8020 Dresden(DE)**
Erfinder: **Böhme, Frank, Dr., Dipl.-Chem.**
**Münchner Strasse 30**
**O-8027 Dresden(DE)**
Erfinder: **Pospiech, Doris, Dipl.-Chem.**
**Heckenweg 7**
**O-8045 Dresden(DE)**
Erfinder: **Rätzsch, Manfred, Prof., Dr.,Dipl.-Chem.**
**Patrice-Lumumba-Strasse 4**
**O-8020 Dresden(DE)**
Erfinder: **Vieth, Christian, Dr., Dipl.-Chem.**
**Bergfrieden 1**
**O-9063 Karl-Marx-Stadt(DE)**
Erfinder: **Stephan, Michael, Dr., Dipl.-Ing.**
**Trattendorfer Strasse 14**
**O-8036 Dresden(DE)**

(74) Vertreter: **Patentanwälte Beetz sen. - Beetz jun. Timpe - Siegfried - Schmitt-Fumian-Mayr**
**Steinsdorfstrasse 10**
**W-8000 München 22(DE)**

(54) **Copolyesteramide aus aromatischen und aliphatischen und/oder alicyclischen Einheiten und Verfahren zu ihrer Herstellung.**

(57) Die Erfindung betrifft neue aromatisch/aliphatische und/oder alicyclische Copolyesteramide mit hohen Molekülmassen sowie ihre Herstellung. In den Copolyesteramiden liegen keine Vernetzungen vor. Eine Festphasennachkondensation wird umgangen bzw. zeitlich stark eingeschränkt. Das Auftreten thermischer Zersetzungsreaktionen, dunkler Verfärbungen der Polymeren sowie die Bildung von Blockstrukturen werden vermieden.

EP 0 469 175 A1

Die Erfindung betrifft neuartige Copolyesteramide aus aromatischen und aliphatischen und/oder alicyclischen Einheiten und Verfahren zu deren Herstellung. Die aromatisch/aliphatischen und/oder alicyclischen Copolyesteramide weisen insbesondere hohe Molekülmassen auf.

Für die Herstellung von Fasern und Formteilen werden neben reinen Polyamiden und Polyestern aus aliphatischen bzw. aliphatisch/aromatischen Bausteinen auch Polyesteramide verwendet. Dabei werden neben Copolymeren aus Polyethylenterephthalat und Polyamid 6 (J. Polym. Sci. Part B: Polym. Phys. 26 - (1988) 7, 1469 - 81) vor allem Polymere aus aromatischen Disäuren, Hydroxycarbonsäuren, Diolen, Aminocarbonsäuren, Aminophenolen und Diaminen eingesetzt (US-A-3 272 774, 4 272 625, 4 351 918 und 4 355 132; EP-A-67 032; JP-A-61-236826, 61-236827 und 61-239014). Diese vollaromatischen Polyesteramide besitzen aufgrund ihrer Struktur hervorragende Materialeigenschaften, wie hohe Zugfestigkeit und hohe Wärmeformbeständigkeit. Die Anwesenheit von Amidbindungen und die aromatischen Bausteine im Polymer bewirken allerdings eine höhere Kristallinität und höhere Schmelztemperatur.

Für die Herstellung und Verarbeitung (Fadenspinnen, Spritzgießen, Filmextrusion) sind deshalb Temperaturen > 300 °C, z.T. > 400 °C, erforderlich, hei denen allerdings bereits Zersetzungsreaktionen ablaufen können.

Polyesteramide, die tiefere Herstellungs- und Verarbeitungstemperaturen erlauben (US-A-4 182 842), bestehen aus Polyethylenterephthalat und para-Aminobenzoesäure. Die Molekülmasse dieser Polyesteramide ist nach 4-stündiger Kondensation für die Verarbeitung zu hochfesten Formteilen noch zu gering. Deshalb muß das Polyesteramid nach der Schmelzkondensation einer mehrstündigen ( ~ 13 Stunden), energieaufwendigen Festphasenkondensation unterworfen werden, um die Molekülmasse zu erhöhen.

Weiterhin sind Copolyesteramide beschrieben worden, die sich aus Ethylenglycol, aromatischen Disäuren, aromatischen Diolen, weiteren aromatischen Disäuren, aromatischen Hydroxycarbonsäuren, aromatischen Diaminen, Aminophenolen und Aminocarbonsäuren zusammensetzen (US-A-4 839 128). Die gewünschten Eigenschaften der Polyesteramide werden hierbei allerdings nur erreicht, indem zu den Polymerbausteinen Ethylenglycol, aromatische Disäure, Hydroxybenzoesäure und amidbildendes Monomer (Diamin, Aminophenol, Aminocarbonsäure) zwei weitere Monomere, nämlich ein aromatisches Diol und weitere aromatische Disäure, in das Polymer eingebaut werden. Der Einbau von weiteren Monomeren kann bei Schmelzekondensationen zur Ausbildung von Blockstrukturen in der Polymerkette führen, welche die Polymereigenschaften verschlechtern.

Für die Herstellung von Polyesteramiden sind verschiedene Verfahren bekannt. Häufig werden Dicarbonsäuren, acetylierte Diole, acetylierte Hydroxycarbonsäuren und acetylierte Diamine, Aminophenole und Aminocarbonsäuren durch Schmelzeumesterung/umamidierung zu Polyesteramiden kondensiert, wobei eine niedrigsiedende Carbonsäure als flüchtiges Kondensationsprodukt entsteht (JP-A-61-236826, 61-239014 und 61-236827, US-A-4 272 625, 4 835 128 und 4 182 842, EP-A-67 032). Dieses Verfahren erfordert für Polyesteramide mit aliphatischen Dioleinheiten neben 4-stündiger Schmelzekondensation eine nachgeschaltete mehrstündige Festphasenkondensation (US-A-4 182 842), um Polykondensate mit hoher Molekülmasse zu erhalten.

Ein anderes Verfahren führt nach DD-A-271 823 durch Umsetzung von Polyalkylen-arylendicarbonsäureestern mit aromatischen Diolen zu Polyesteramiden, wobei Alkylendiol als flüchtiges Kondensat freigesetzt wird. Die dabei eingesetzten freien Diamine sind sehr leicht oxidierbar, weshalb die entstehenden Polyesteramide oft dunkel gefärbt sind.

Ein weiteres Verfahren geht zur Synthese von Polyesteramiden von Dicarbonsäurechloriden, Diolen, Diaminen und Aminophenolen aus. Die Reaktion setzt allerdings korrosives HCl-Gas frei, welches durch Basen gebunden werden muß. Die Reaktion muß außerdem in Lösungsmitteln erfolgen (Dimethylformamid u.a.), weshalb eine aufwendige Lösungsmittelaufarbeitung notwendig wird (J. Polym. Sci., Polym. Chem. Ed., 22 (1984) 12, 3983 - 3988; J. Polym. Sci., Polym. Chem. Ed., 19 (1981) 3285 ff.).

Es ist bekannt, lineare Polyester mit Diisocyanaten zur Herstellung von Polyurethanen bzw. ungesättigten Polyesterharzen zu verknüpfen (Plaste und Kautschuk 15 (1968), 347). Dabei handelt es sich um die Erzeugung von Urethanbindungen, die bei den für hocharomatisch-aliphatische Copolyester angewandten Synthese- und Verarbeitungstemperaturen nicht mehr stabil sind. Die thermischen Zersetzungstemperaturen für Urethane aus aromatischen Isocyanaten und R-OH liegen für verschiedene R bei:

R aliphatisch: 200 °C
R aromatisch : 130 °C

(Polyurethane, Fachbuchverlag Leipzig, 1973, S. 24). Weiter ist bekannt, daß Isocyanate bei hohen Temperaturen und Anwesenheit von basischen Katalysatoren, wie Alkaliacetaten, zur Bildung von Isocyanuraten, den entsprechenden Trimeren, neigen (Ullmanns Encycl. d. techn. Chem., 1957, Bd. 9, S. 4, und Kunststoffhandbuch, Bd. 7: Polyurethane, S. 81). Die aus Diisocyanaten entstehenden dreiwertigen Isocyanurate besitzen drei reaktive NCO-Gruppen, durch die bei der Reaktion mit linearen Copolyestern eine

Verzweigung und/oder Vernetzung im Polyesteramid hervorgerufen werden kann. Alkaliacetate sowie viele andere Metallacetate sind gebräuchliche Umesterungskatalysatoren und deshalb stets in Polyestern und Copolyestern enthalten, insbesondere in Polymeren, die durch Umacylierungsreaktionen unter Essigsäureabspaltung hergestellt werden (Polyesterfasern, 1975, Akademieverlag Berlin, Seiten 116-117). Verzweigte und vernetzte Polymere besitzen höhere Schmelzpunkte und schlechtere Löslichkeiten als die entsprechenden nicht verzweigten bzw. nicht vernetzten Polymere oder sind sogar unschmelzbar. Diese Polymeren lassen sich deshalb nur noch schwer bzw. überhaupt nicht mehr thermoplastisch verarbeiten.

Aufgabe der Erfindung ist es, neue aromatisch/aliphatische Copolyesteramide mit verbesserten Eigenschaften und hohen Molekülmassen und ihre Herstellung unter Einsatz geeigneterer Ausgangsstoffe anzugeben, bei denen das Auftreten thermischer Zersetzungsreaktionen, dunkle Verfärbung der Polymeren und die Bildung von Blockstrukturen dabei vermieden werden soll. Eine Festphasennachkondensation sollte dabei nach Möglichkeit umgangen bzw. zeitlich stark eingeschränkt werden. Das Auftreten von Vernetzungen in den Copolyesteramiden soll ferner dabei ausgeschlossen sein.

Die Aufgabe wird anspruchsgemäß gelöst. Die abhängigen Ansprüche betreffen vorteilhafte Ausführungsformen.

Die erfindungsgemäßen Copolyesteramide sind aus zweiwertigen Resten (A), (B), (C) und/oder (D) und/oder (E) mit folgenden Strukturen

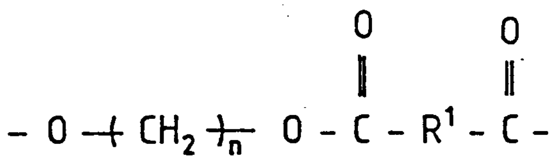

(A)

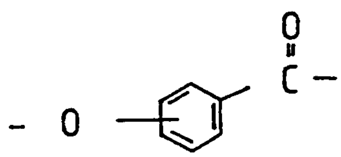

(B)

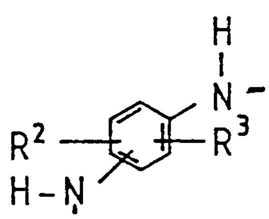

(C)

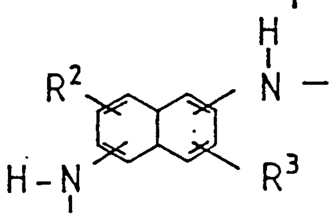

(D)

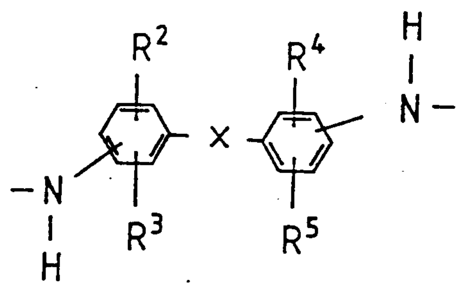

(E)

aufgebaut, worin bedeuten:

$R^1$ einen zweiwertigen alicyclischen Rest mit 4 bis 20 Kohlenstoffatomen oder einen zweiwertigen aromatischen Rest mit 6 bis 16 Kohlenstoffatomen, wobei die Carbonylbindungen in (A) durch mindestens 3 Kohlenstoffatome voneinander getrennt sind und mindestens 50 Molanteile in % der Reste $R^1$ zweiwertige aromatische Reste sind und n in (A) die ganzen Zahlen 2, 3 oder 4 darstellt,

mindestens 60 Molanteile in % der Reste (B) das para-Isomer,

$R^2$ bis $R^5$ in (C), (D) und (E) unabhängig voneinander ein Wasserstoffatom, einen Alkylrest mit 1 bis 5 Kohlenstoffatomen, einen Alkoxyrest mit 1 bis 5 Kohlenstoffatomen, eine Nitrogruppe, eine Nitrilgruppe oder ein Halogenatom, wobei die Stickstoffatome in (D) in 1,3-, 1,4-, 1,6-, 1,7- oder 2,6-Stellung und die Stickstoffatome in (E) in 4,4'-, 3,3'-, 4,3'- oder 4,5'-Stellung angeordnet sind,

und

X in (E) eine Einfachbindung oder eine Gruppe der Formel $-CH_2-$, $-CH_2-CH_2-$, $-CH(CH_3)-$, $-CH(C_2H_5)$, $-C(CH_3)_2-$, -CO-, -S-, $SO_2$- oder -O-, wobei die Reste (B) 30 bis 90 Molanteile in %, bezogen auf die Gesamtmolmenge an Resten (A) und (B), ausmachen und die Summe der Anteile der Gruppen (C), (D) und (E) 0,5 bis 10 Molanteile in %, bezogen auf die Molanteile der Reste (B), beträgt.

Vorteilhaft ist es, wenn im Rest (A) $R^1$ einen zweiwertigen aromatischen Rest mit 6 bis 16 Kohlenstoffatomen bedeutet, n in (A) gleich 2 ist und mindestens 90 Molanteile in % des Rests (B) das para-Isomer sind und der Rest (B) in einer Menge von 40 bis 85 Molanteilen in %, bezogen auf die Gesamtmolmenge der Reste (A) und (B), vorliegt. Im Rest (A) kann $R^2$ einen zweiwertigen aromatischen Rest mit 6 Kohlenstoffatomen bedeuten. Der Rest (A) kann auch die folgende Strukturformel enthalten:

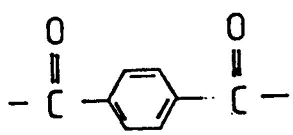

.

In dem Rest (B) liegt das Sauerstoffatom vielleicht in meta- oder para-Stellung, bezogen auf die Carbonylgruppe, vor. Die Stickstoffatome in (C) sind vorzugsweise in meta- oder para-Stellung zueinander angeordnet. Weiter ist von Vorteil, wenn der Rest (B) in einer Menge von 50 bis 80 Molanteilen in %, bezogen auf die Gesamtmolmenge der Reste (A) und (B), vorliegt. Die Stickstoffatome im Rest (E) stehen günstigerweise in 4,4'-Stellung zueinander, und X entspricht vorteilhaft einem Rest der Formel $-CH_2-$. Der Rest (E) weist vorzugsweise folgende Strukturformel auf:

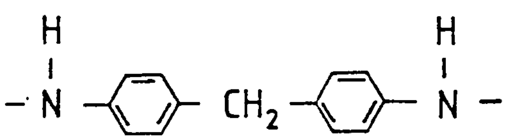

Nach einer bevorzugten Ausführungsform der Erfindung sind die Copolyesteramide aus zweiwertigen Resten der Formeln

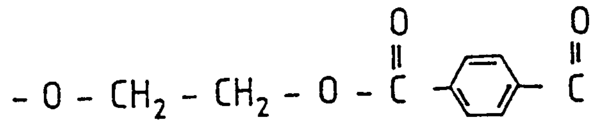

,

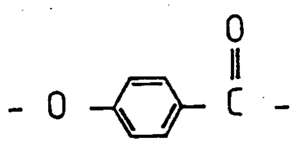

und

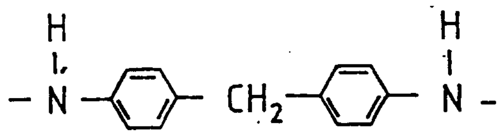

aufgebaut. Der Rest (B) liegt ferner vorteilhaft in einer Menge von 60 bis 80 Molanteilen in % der Gesamtmolmenge der Reste (A) und (B) und der Rest (E) vorteilhaft in einer Menge von 0,5 bis 5 Molanteilen in %, bezogen auf die Molanteile des Restes (B), vor.

Das Verfahren gemäß der Erfindung zur Herstellung von Copolyesteramiden aus aromatischen, aliphatischen und/oder alicyclischen Einheiten und insbesondere der oben definierten Copolyesteramide beruht darauf, daß ein Polyester aus Resten (A) der Formel

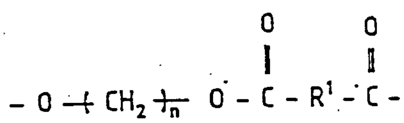

(A) ,

worin $R^1$ einen zweiwertigen alicyclischen Rest mit 4 bis 20 Kohlenstoffatomen oder einen zweiwertigen aromatischen Rest mit 6 bis 16 Kohlenstoffatomen und n 2, 3 oder 4 bedeuten, wobei die Carbonylbindungen durch mindestens 3 Kohlenstoffatome voneinander getrennt sind und mindestens 50 Molanteile in % der Reste $R^1$ zweiwertige aromatische Reste sind,
insbesondere ein linearer Polyester der Formel I,

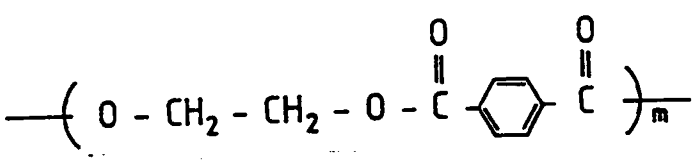

(I),

worin m den Polymerisationsgrad bedeutet,
mit einer oder mehreren meta- und/oder para-Acyloxybenzoesäuren acidolytisch gespalten und anschließend unter Rühren im Vakuum zum entsprechenden Copolyester kondensiert wird; es ist dadurch gekennzeichnet, daß der Copolyester anschließend mit Diisocyanaten der Formeln

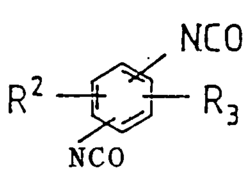

(F) und/oder

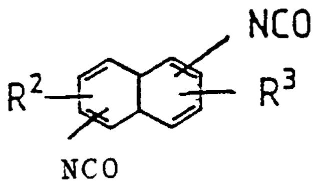

(G) und/oder

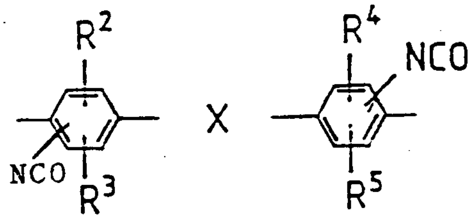

(H)

umgesetzt wird,
worin bedeuten:

$R^2$ bis $R^5$ in (F), (G) und (H) unabhängig voneinander ein Wasserstoffatom, einen Alkylrest mit 1 bis 5 Kohlenstoffatomen, einen Alkoxyrest mit 1 bis 5 Kohlenstoffatomen, eine Nitrogruppe, eine Nitrilgruppe oder ein Halogenatom,
und

X im Rest (H) eine Einfachbindung oder einen Rest der Formel $-CH_2-$, $-CH_2-CH_2-$, $-CH(CH_3)-$, $-CH(C_2H_5)-$, $-C(CH_3)_2-$, -CO-, -S-, $-SO_2-$ oder -O-, wobei die Isocyanatreste in (G) in 1,3-, 1,4-, 1,6-, 1,7- oder 2,6-Stellung und die Isocyanatreste in (H) in 4,4'-, 3,3'-, 4,3'- oder 4,5'-Stellung angeordnet sind.

Vorteilhaft stellen mindestens 60 Molanteile in % der Acyloxybenzoesäure das para-Isomer dar.

Die Isocyanatgruppen in (F) sind vorzugsweise in meta- oder para-Stellung zueinander angeordnet.

Die Acyloxybenzoesäure liegt vorteilhaft in einer Menge von 30 bis 90 Molanteilen in %, bezogen auf die Gesamtmolmenge der Acyloxybenzoesäure und der Reste (A) bzw. (I), vor. Die Summe der Reste (F), (G) und (H) beträgt vorteilhaft etwa 0,5 bis 10 Molanteile in %, bezogen auf die Molanteile der Acyloxybenzoesäure.

Nach einer weiteren Ausführungsform können anstatt der Diisocyanate (F), (G) und (H), oder im Gemisch mit diesen, Verbindungen eingesetzt werden, die Diisocyanate freisetzen, wie z.B. Urethane aus oben genannten Diisocyanaten und aliphatischen Alkoholen und/oder Phenolen, die am aromatischen Kern einen oder mehrere Substituenten, wie Alkyl- und Alkoxygruppen mit 1 bis 5 Kohlenstoffatomen, Halogenatome, Nitrogruppen und/oder Nitrilgruppen, tragen können.

Nach einer bevorzugten Ausführungsform ist der Rest $R^1$ in (A) ein zweiwertiger aromatischer Rest mit 6 bis 16 Kohlenstoffatomen, n beträgt 2, die Acyloxybenzoesäure besteht zu 90 Molanteilen in % aus dem para-Isomer und liegt in einer Menge von 40 bis 85 Molanteilen in %, bezogen auf die Gesamtmolmenge an Acyloxybenzoesäure und Resten (A), vor. Von Vorteil ist, wenn $R^1$ im Rest (A) einen zweiwertigen aromatischen Rest mit 6 Kohlenstoffatomen bedeutet, oder der Rest $R^1$ in (A) die folgende Struktur

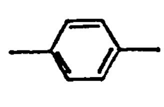

besitzt.

Weiter ist von Vorteil, wenn die Menge der Acyloxybenzoesäure 50 bis 80 Molanteile in %, bezogen auf die Gesamtmolmenge an Acyloxybenzoesäure und Resten (A), beträgt. Die Isocyanatgruppen stehen in (H) vorteilhaft in 4,4'-Stellung zueinander, und der Rest X in (H) entspricht vorzugsweise einer $-CH_2$-Gruppe.

Die Verbindung (H) kann insbesondere folgende Struktur

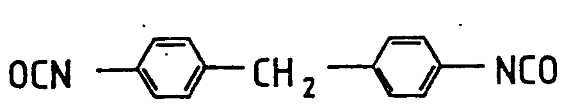

besitzen.

Nach einer weiteren bevorzugten Ausführungsform besitzt der Rest (A) die Struktur I,

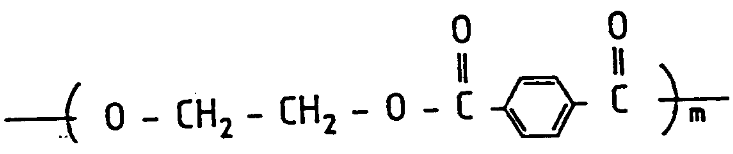 (I),

wobei m den Polymerisationsgrad bedeutet.

Die Acyloxybenzoesäure besteht vorteilhaft nur aus dem para-Isomer, und die Verbindung (H) hat vorzugsweise folgende Struktur:

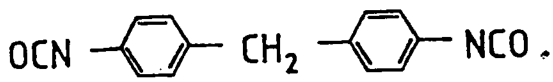

Nach einer weiteren günstigen Ausführungsform liegt die Acyloxybenzoesäure in einer Menge von 60 bis 80 Molanteilen in %, bezogen auf die Gesamtmolmenge an Acyloxybenzoesäure und Resten (A), vor, und die von (H) abgeleiteten Reste liegen in einer Menge von 0,5 bis 5 Molanteilen, bezogen auf die Molanteile der Acyloxybenzoesäure, vor. Diese Copolyesteramide zeichnen sich durch hohe Molekülmasse, hohe Zugfestigkeit und hohe Biegesteifigkeit aus.

Die Diisocyanate und/oder Diisocyanat freisetzenden Verbindungen können dabei zur Schmelze des Copolyesters gegeben oder vor dem Aufschmelzen mit dem festen Copolyester gemischt werden.
Als vorteilhaft erweist es sich, die Zugabe von Diisocyanaten und/oder Diisocyanat freisetzenden Verbindungen nach 1 bis 300 Minuten, vorzugsweise 150 bis 240 Minuten, Copolyesterkondensation im Vakuum im Temperaturbereich von 260 bis 320 °C, vorzugsweise 275 bis 300 °C, und im Druckbereich von 106 bis $6{,}66 \cdot 10^{-3}$ kPa und vorzugsweise bei 101 kPa während 0,1 bis 50 min und vorzugsweise während 1 bis 5 min unter Rühren vorzunehmen.

Die Diisocyanate und/oder Diisocyanat freisetzenden Verbindungen können in fester oder geschmolzener Form oder in einem inerten Lösungsmittel gelöst zugegeben werden.

Als vorteilhaft erweist es sich, nach dem Zusatz der Diisocyanate und/oder Diisocyanat freisetzenden Verbindungen noch 1 bis 60 min und vorzugsweise 30 min bei Temperaturen von 260 bis 320 °C und vorzugsweise 275 bis 300 °C und im Druckbereich von 106 bis $6{,}66 \cdot 10^{-3}$ kPa und vorzugsweise unter vermindertem Druck von 133 bis 6,66 Pa nachzurühren.

Der Zusatz von Diisocyanaten und/oder Diisosyanat freisetzenden Verbindungen zur Copolyesterschmelze kann auch in einem Extruder, vorzugsweise mit Entgasungseinrichtung, im oben genannten Temperaturintervall durch eine Dosiereinrichtung bei Verweilzeiten des Polymers im Extruder von 1 bis 30 min und vorzugsweise 5 bis 10 min erfolgen. Das Polymer kann nach der Zugabe oben genannter Verbindungen unter vermindertem Druck von 13300 bis 133 Pa im Extruder entgast werden.

Neben der Zugabe zur Copolyesterschmelze können die Diisocyanate und/oder Diisocyanat freisetzenden Verbindungen dem Copolyester vor dem Aufschmelzen zugegeben werden.

Überraschend war, daß die Copolyesteramide sehr hohe Inhärentviskositäten

$$\left(\eta_{\text{inh.}} = \frac{\ln \eta_{\text{rel}}}{c}\right)$$

von 0,9 bis 1,2 und höher aufweisen und somit eine energetisch und apparativ aufwendige Festphasennachkondensation nicht erforderlich ist. Die Copolyesteramide sind helle Polymere, ohne Anzeichen einer thermischen Zersetzung. Die Copolyesteramide aus Ethylenglycol, Terephthalsäure, p-Oxybenzoesäure und verschiedenen Diisocyanaten sind wie die entsprechenden Copolyester bis zu einem Oxybenzoatanteil von 75 Molanteilen in %, bezogen auf die Gesamtmolmenge an Ethylenterephthalat und Oxybenzoesäure, in einem Lösungsmittelgemisch aus 40 Volumenteilen 1,1,2,2-Tetrachlorethan und 60 Volumenteilen Phenol überraschenderweise vollständig löslich, wodurch eine Vernetzung durch den Diisocyanatzusatz ausgeschlossen werden kann. Im gleichen Lösungsmittelgemisch wurden die Lösungsviskositäten bei einer Polymerkonzentration (c) von 0,5 g/100 ml gemessen.

Bei diesem Verfahren werden als Umesterungskatalysatoren die bereits im Ausgangspolyester aus Einheiten der Formel (A) bzw. der Formel (I) enthaltenen Verbindungen verwendet. Der Zusatz weiterer Katalysatoren ist prinzipiell möglich.

Nachfolgend wird die Erfindung anhand von Ausführungsbeispielen näher erläutert.

**Beispiel 1**

Dieses Beispiel beschreibt die Herstellung eines Copolyesteramids aus 59,7 Molanteilen in % Oxybenzoat, 39,8 Molanteilen in % Poly(ethylenterephthalat) und 0,42 Molanteilen Methylen-p,p'-diphenyldiisocyanat (MDI).

In einem 500-ml-Vierhalskolben mit vakuumdichtem Rührer, Stickstoffeinlaß sowie Destillationskopf mit Vorlage und Vakuumanschluß werden 75,6 g (0,419 mol) p-Acetoxybenzoesäure und 53,8 g (0,279 mol) PET (Poly(ethylenterephthalat)) -Granulat ($\eta_{inh}$ = 0,81 dl/g), in dem 3 • $10^{-4}$ mol $Ti(O\text{-}n\text{-}C_4H_9)_4$ pro Mol Terephthalat enthalten sind, gemischt und bei 275 °C unter Stickstoff in einem Metallbad aufgeschmolzen. Nach 60 min bei 275 °C unter Rühren und Stickstoffstrom (101 kPa) ist der größte Teil der entstehenden Essigsäure abdestilliert. Es liegt eine dünnflüssige Schmelze vor. Danach wird Vakuum (66,5 Pa) angelegt und während 2 h bei 275 °C weitere Essigsäure aus der Schmelze unter Rühren entfernt.

Nachdem das Vakuum gegen einen Stickstoffstrom ausgetauscht wurde, wird durch einen geöffneten Kolbenhals 0,75 g (0,003 mol), entsprechend 0,7 Molanteilen in %, bezogen auf eingesetzte p-Acetoxybenzoesäure, Methylen-p,p'-diphenyldiisocyanat (MDI) der Formel

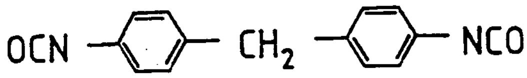

unter Rühren zur Schmelze gegeben. Es entsteht eine hochviskose Schmelze. Der Stickstoffstrom wird gegen Vakuum (66,5 Pa) ausgetauscht und die Schmelze bei 275 °C unter Vakuum 30 min weiter gerührt. Das entstandene Copolyesteramid hat eine inhärente Viskosität von $\eta_{inh}$ = 1,1 dl/g.

Das entstandene Produkt wird bei einer Schmelzetemperatur von 250 °C und einer Werkzeugtemperatur von 25 °C zu Schulterstäben mit einer Dicke von 1,8 mm verspritzt. Mechanische Prüfungen nach TGL 14070 und TGL 39782 ergeben folgende Kennwerte:

Zugfestigkeit: 220 MPa
Zugmodul : 9,2 GPA.

**Beispiel 2**

Das Beispiel beschreibt die Herstellung eines Copolyesteramids aus 39,7 Molanteilen in % Poly(ethylenterephthalat), 59,6 Molanteilen in % Oxybenzoat und 0,7 Molanteilen in % 2,4-Toluyldiisocyanat.

In einem 500-ml-Vierhalskolben mit vakuumdichtem Rührer, Stickstoffeinlaß sowie Destillationskopf mit Vorlage und Vakuumanschluß werden 75,6 g (0,419 mol) p-Acetoxybenzoesäure und 53,8 g (0,279 mol) PET-Granulat ($\eta_{inh}$ = 0,81 dl/g), in dem 3 • $10^{-4}$ mol $Ti(O\text{-}n\text{-}C_4H_9)_4$ pro Mol Terephthalat enthalten sind, gemischt und bei 275 °C unter Stickstoff in einem Metallbad aufgeschmolzen. Nach 60 min bei 275 °C unter Rühren und Stickstoffstrom (101 kPa) ist der größte Teil der entstehenden Essigsäure abdestilliert. Es liegt eine dünnflüssige Schmelze vor. Danach wird Vakuum (66,5 Pa) angelegt und während 2 h bei 275 °C weitere Essigsäure aus der Schmelze unter Rühren entfernt. Nachdem das Vakuum gegen einen Stickstoffstrom ausgetauscht wurde, wird durch einen geöffneten Kolbenhals 0,9 g (0,0051 mol), entsprechend 1,19 Molanteilen in %, bezogen auf eingesetzte p-Acetoxybenzoesäure, 2,4-Toluyldiisocyanat (TDI) der Formel

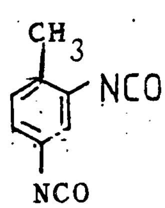

unter Rühren zur Schmelze gegeben. Es entsteht eine hochviskose Schmelze. Der Stickstoffstrom wird gegen Vakuum (66,5 Pa) ausgetauscht und die Schmelze bei 275 °C unter Vakuum 45 min weiter gerührt. Das entstandene Copolyesteramid hat eine inhärente Viskosität von $\eta_{inh}$ = 1,05 dl/g.

**Beispiel 3**

Dieses Beispiel beschreibt die Herstellung eines Copolyesteramids aus 59,6 Molanteilen in % Oxybenzoat, 39,7 Molanteilen in % Poly(ethylenterephthalat) und 0,7 Molanteilen in % Methylen-p,p'-diphenylendiphenylurethan.

In einem 500-ml-Vierhalskolben mit vakuumdichtem Rührer, Stickstoffeinlaß sowie Destillationskopf mit Vorlage und Vakuumanschluß werden 75,6 g (0,419 mol) p-Acetoxybenzoesäure und 53,8 g (0,279 mol) PET-Granulat ($\eta_{inh}$ = 0,81 dl/g), in dem 3 • $10^{-4}$ mol $Ti(O\text{-}n\text{-}C_4H_9)_4$ pro Mol Terephthalat enthalten sind, gemischt und bei 275 °C unter Stickstoff in einem Metallbad aufgeschmolzen. Nach 60 min bei 275 °C unter Rühren und Stickstoffstrom (101 kPa) ist der größte Teil der entstehenden Essigsäure abdestilliert. Es liegt eine dünnflüssige Schmelze vor. Danach wird Vakuum (66,5 Pa) angelegt und während 2 h bei 275 °C weitere Essigsäure aus der Schmelze unter Rühren entfernt.

Nachdem das Vakuum gegen einen Stickstoffstrom ausgetauscht wurde, wird durch einen geöffneten Kolbenhals 2,2 g (0,0051 mol), entsprechend 1,19 Molanteilen in %, bezogen auf eingesetzte p-Acetoxybenzoesäure, Methylenp,p'-diphenylen-diphenylurethan

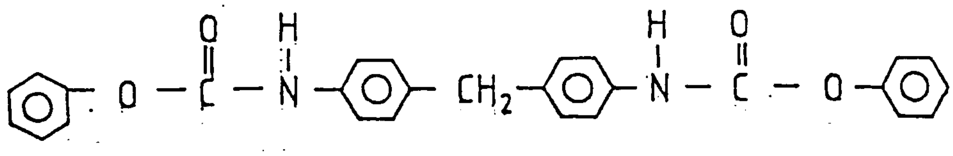

unter Rühren zur Schmelze gegeben.

Es entsteht eine hochviskose Schmelze. Der Stickstoffstrom wird gegen Vakuum (66,5 Pa) ausgetauscht und die Schmelze bei 275 °C unter Vakuum 60 min weiter gerührt. Das entstandene Copolyesteramid hat eine inhärente Viskosität von $\eta_{inh}$ = 1,1 dl/g.

**Beispiel 4**

In einen 10-l-Edelstahlrührkessel mit Stickstoffeinlaß und Destillationskopf mit Vakuumanschluß werden 3000 g (16,66 mol) p-Acetoxybenzoesäure entsprechend 60 Molanteilen in % und 2134 g Poly-(ethylenterephthalat) (11,1 mol) mit einer inhärenten Viskosität von 0,81 dl/g, in dem 3 • $10^{-4}$ mol Katalysator $Ti(O\text{-}n\text{-}C_4H_9)_4$ pro Mol Terephthalat enthalten sind, entsprechend 40 Molanteilen in %, in einem trockenen Stickstoffstrom auf 275 °C erwärmt. Während 75 min destilliert der größte Teil der freiwerdenden Essigsäure ab. Danach wird der Druck langsam reduziert und auf einen Unterdruck von 66,5 Pa gebracht. Die Schmelze wird 3 h bei 275 °C und 66,5 Pa gerührt, wobei ein Copolyester mit einer inhärenten Viskosität von 0,60 dl/g erhalten wird. Nachdem der Unterdruck gegen einen Stickstoffüberdruck von 0,15 MPa ausgetauscht wurde, wird der Copolyester im geschmolzenen Zustand von der Bodenöffnung des Rührkessels über eine Zahnradpumpe und eine wärmeisolierte Leitung einem Zweiwellenextruder mit Dosiereinrichtung und Entgasungseinrichtung zugeführt. Der Wellendurchmesser beträgt 28 mm. Die Temperatur des Extruders wird auf 275 °C, die Verweilzeit auf 2,5 min und die Drehzahl auf 70 $min^{-1}$ eingestellt. Zur Copolyesterschmelze wird durch die Dosiereinrichtung Methylen-p,p'-diphenyldiisocyanat (MDI) der Formel

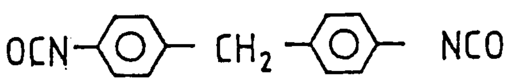

in geschmolzener Form so zudosiert, daß seine Menge 0,7 Molanteile in %, bezogen auf eingesetzte p-Acetoxybenzoesäure, beträgt. Die Viskosität der Schmelze steigt dabei an. Das Copolyesteramid wird am Extruderaustrag als Strang abgezogen und nach Abkühlung im Wasserbad zu Granulat verarbeitet. Das erhaltene Copolyesteramid hat eine inhärente Viskosität von $\eta_{inh}$ = 1,12 dl/g.

**Beispiel 5**

Dieses Beispiel beschreibt die Herstellung eines Copolyesteramids aus 39,7 Molanteilen in % Poly-(ethylenterephalat), 59,6 Molanteilen in % Oxybenzoat und 0,7 Molanteilen in % 2,6-Naphthalindiisocyanat.

In einem 500-ml-Vierhalskolben mit vakuumdichtem Rührer, Stickstoffeinlaß sowie Destillationskopf mit Vorlage und Vakuumanschluß werden 75,6 g (0,419 mol) p-Acetoxybenzoesäure und 53,8 g (0,279 mol) PET-Granulat ( $\eta_{inh}$ = 0,81 dl/g), in dem 3 • $10^{-4}$ mol $Ti(O\text{-}n\text{-}C_4H_9)_4$ pro Mol Terephthalat enthalten sind,

gemischt und bei 275 °C unter Stickstoff in einem Metallbad aufgeschmolzen. Nach 60 min bei 275 °C unter Rühren und Stickstoffstrom (101 kPa) ist der größte Teil der entstehenden Essigsäure abdestilliert. Es liegt eine dünnflüssige Schmelze vor. Danach wird Vakuum (66,5 Pa) angelegt und während 2 h bei 275 °C weitere Essigsäure aus der Schmelze unter Rühren entfernt.

Nachdem das Vakuum gegen einen Stickstoffstrom ausgetauscht wurde, wird durch einen geöffneten Kolbenhals 1,07 g (0,0051 mol), entsprechend 1,19 Molanteilen in %, bezogen auf die eingesetzte p-Acetoxybenzoesäure, 2,6-Naphthalindiisocyanat der Formel

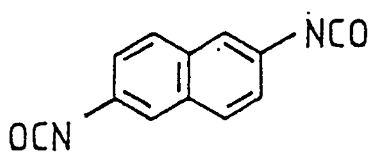

unter Rühren zur Schmelze gegeben. Es entsteht eine hochviskose Schmelze. Der Stickstoffstrom wird gegen Vakuum (66,5 Pa) ausgetauscht und die Schmelze bei 275 °C unter Vakuum 45 min weiter gerührt. Das entstandene Copolyesteramid hat eine inhärente Viskosität von $\eta_{inh}$ = 1,07 dl/g.

Das Copolyesteramid ist dadurch ausgezeichnet, daß es keine wesentlichen Mengen an Sauerstoffbindungen zwischen aliphatischen und aromatischen Resten aufweist. Durch den Ausdruck "keine wesentliche Menge" soll zum Ausdruck gebracht werden, daß die Menge an Sauerstoffbindungen zwischen aliphatischen und aromatischen Resten, falls diese vorliegen, unterhalb der Nachweisgrenze durch NMR-Spektrometrie liegt. Dies bedeutet, daß die Menge dieser Sauerstoffbindungen geringer ist als etwa 3 Molanteile in %.

Zu den Endgruppen der erfindungsgemäßen Verbindungen ist allgemein folgendes festzustellen: Entsprechend dem Herstellungsverfahren der Acidolyse des Ausgangspolyesters aus Resten der Struktur (A) mit Acyloxybenzoesäure(n) und der anschließenden Kondensation trägt der resultierende Copolyester vor dem erfindungsgemäßen Verfahrensschritt im wesentlichen nur Carboxy- und Acyloxy-Endgruppen. Hydroxygruppen, die durch (A) eingebracht werden können, liegen nur in vernachlässigbarer Menge vor oder werden im Syntheseverlauf zu Acyloxygruppen umgesetzt. Nach den erfindungsgemäßen Verfahrensschritten, d.h. der Umsetzung mit den Verbindungen (F ), (G) und/oder (H), tragen die erfindungsgemäßen Copolyesteramide im wesentlichen nur Acyloxy-Endgruppen und, je nach zugesetzter Menge (F), (G) und/oder (H), Carboxy- oder Isocyanat-Endgruppen. Ist die Menge der Isocyanatgruppen in (F), (G) und/oder (H) gleich der im Copolyester enthaltenen Carboxy-Endgruppen, so tragen die erfindungsgemäßen Copolyesteramide nur Acyloxy-Endgruppen.

Dies folgt aus der beim erfindungsgemäßen Verfahren gewählten Stoechiometrie bzw. den eingesetzten Mengen der Diisocyanate in bezug auf die eingesetzten Acyloxybenzoesäuren.

**Patentansprüche**

**1.** Copolyesteramide, dadurch gekennzeichnet, daß sie aus zweiwertigen Resten (A), (B), (C) und/oder (D) und/oder (E) mit folgenden Strukturen

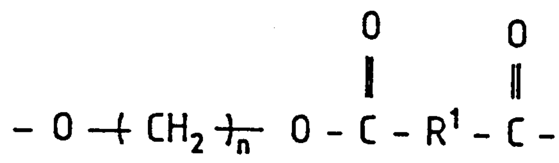

(A)

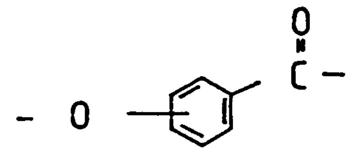

(B)

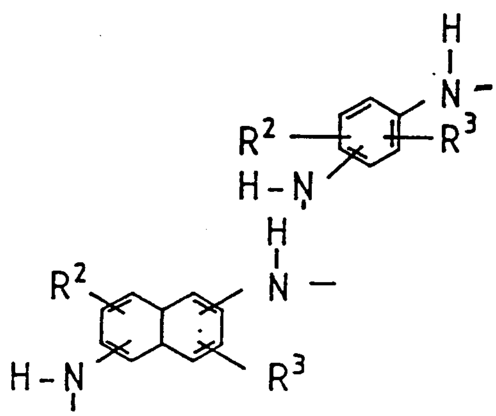

(C)

(D)

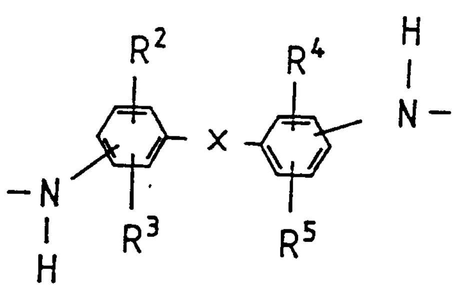

(E)

aufgebaut sind, worin bedeuten:

$R^1$ einen zweiwertigen alicyclischen Rest mit 4 bis 20 Kohlenstoffatomen oder einen zweiwertigen aromatischen Rest mit 6 bis 16 Kohlenstoffatomen, wobei die Carbonylbindungen in (A) durch mindestens 3 Kohlenstoffatome voneinander getrennt sind und mindestens 50 Molanteile in % der Reste $R^1$ zweiwertige aromatische Reste sind und n in (A) die ganzen Zahlen 2, 3 oder 4 darstellt,

mindestens 60 Molanteile in % der Reste (B) das para-Isomer,

$R^2$ bis $R^5$ in (C), (D) und (E) unabhängig voneinander ein Wasserstoffatom, einen Alkylrest mit 1 bis 5 Kohlenstoffatomen, einen Alkoxyrest mit 1 bis 5 Kohlenstoffatomen, eine Nitrogruppe, eine Nitrilgruppe oder ein Halogenatom, wobei die Stickstoffatome in (D) in 1,3-, 1,4-, 1,6-, 1,7- oder 2,6-Stellung und die Stickstoffatome in (E) in 4,4'-, 3,3'-, 4,3'- oder 4,5'-Stellung angeordnet sind,

und

X in (E) eine Einfachbindung oder eine Gruppe der Formel $-CH_2-$, $-CH_2-CH_2-$, $-CH(CH_3)-$, $-CH(C_2H_5)$, $-C(CH_3)_2-$, -CO-, -S-, $-SO_2-$ oder -O-, wobei die Reste (B) 30 bis 90

Molanteile in %, bezogen auf die Gesamtmolmenge an Resten (A) und (B), ausmachen und die Summe der Anteile der Gruppen (C), (D) und (E) 0,5 bis 10 Molanteile in %, bezogen auf die Molanteile der Reste (B), beträgt.

**2.** Copolyesteramide nach Anspruch 1, dadurch gekennzeichnet, daß in den Resten (A) $R^1$ einen zweiwertigen aromatischen Rest mit 6 bis 16 Kohlenstoffatomen und n in (A) 2 bedeuten und mindestens 90 Molanteile in % des Restes (B) das para-Isomer sind und der Rest (B) in einer Menge von 40 bis 85 Molanteilen in %, bezogen auf die Gesamtmolmenge der Reste (A) und (B), vorliegt.

**3.** Copolyesteramide nach den Ansprüchen 1 und 2, dadurch gekennzeichnet, daß in den Resten (A) $R^1$ einen zweiwertigen aromatischen Rest mit 6 Kohlenstoffatomen bedeutet.

**4.** Copolyesteramide nach den Ansprüchen 1 bis 3, dadurch gekennzeichnet, daß die Reste (A) die Struktur

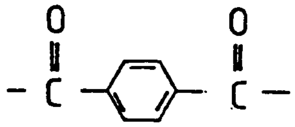

enthalten.

**5.** Copolyesteramide nach den Ansprüchen 3 und 4, dadurch gekennzeichnet, daß in den Resten (B) das Sauerstoffatom in meta- oder para-Stellung, bezogen auf die Carbonylgruppe, vorliegt.

**6.** Copolyesteramide nach den Ansprüchen 1 bis 5, dadurch gekennzeichnet, daß die Stickstoffatome in (C) in meta- oder para-Stellung zueinander angeordnet sind.

**7.** Copolyesteramide nach den Ansprüchen 1 bis 5, dadurch gekennzeichnet, daß die Reste (B) in einer Menge von 50 bis 80 Molanteilen in %, bezogen auf die Gesamtmolmenge der Reste (A) und (B), vorliegen.

**8.** Copolyesteramide nach den Ansprüchen 1 bis 7, dadurch gekennzeichnet, daß die Stickstoffatome in den Resten (E) in 4,4'-Stellung zueinander stehen und X einen Rest der Formel $-CH_2-$ bedeutet.

**9.** Copolyesteramide nach Anspruch 1 und 8, dadurch gekennzeichnet, daß die Reste (E) die Strukturformel

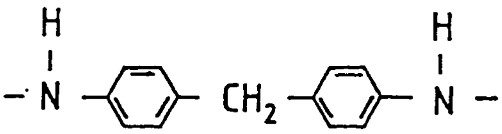

aufweisen.

**10.** Copolyesteramide nach Anspruch 1 bis 9, dadurch gekennzeichnet, daß sie aus zweiwertigen Resten der Formeln

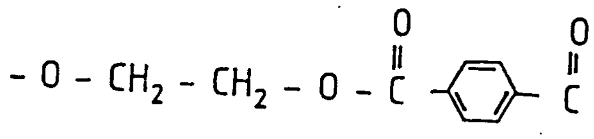 ,

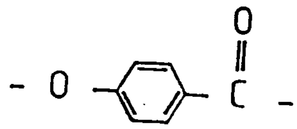

und

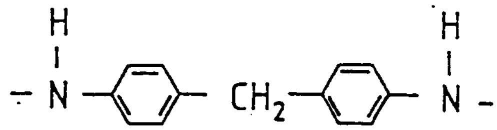

aufgebaut sind und die Reste (B) in einer Menge von 60 bis 80 Molanteilen in % der Gesamtmolmenge der Reste (A) und (B) und die Reste (E) in einer Menge von 0,5 bis 5 Molanteilen in %, bezogen auf die Molanteile der Reste (B), vorliegen.

**11.** Verfahren zur Herstellung von Copolyesteramiden aus aromatischen, aliphatischen und/oder alicyclischen Einheiten, insbesondere zur Herstellung der Copolyesteramide nach den Ansprüchen 1 bis 10, bei dem ein Polyester aus Resten der Formel (A),

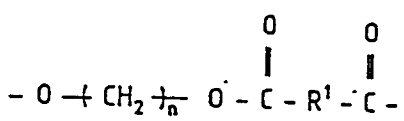 (A),

worin $R^1$ einen zweiwertigen alicyclischen Rest mit 4 bis 20 Kohlenstoffatomen oder einen zweiwertigen aromatischen Rest mit 6 bis 16 Kohlenstoffatomen und n 2, 3 oder 4 bedeuten, wobei die Carbonylbindungen durch mindestens 3 Kohlenstoffatome voneinander getrennt sind und mindestens 50 Molanteile in % der Reste $R^1$ zweiwertige aromatische Reste sind,

mit einer oder mehreren para- und/oder meta-Acyloxybenzoesäuren gemischt, geschmolzen, acidolytisch gespalten und unter vermindertem Druck zum entsprechenden Copolyester kondensiert wird, dadurch gekennzeichnet, daß der Copolyester bei Temperaturen von 260 bis 320 °C unter Rühren und anschließendem Nachrühren

(a) mit Diisocyanaten der folgenden Strukturen

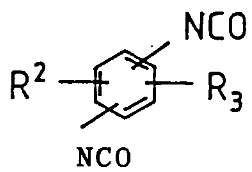

(F) und/oder

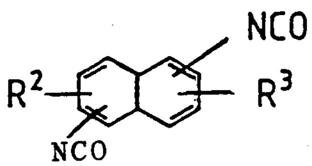

(G) und/oder

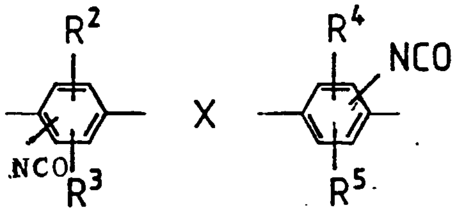

(H)

zur Reaktion gebracht wird, worin bedeuten:

$R^2$ bis $R^5$ in (F), (G) und (H) unabhängig voneinander ein Wasserstoffatom, einen Alkylrest mit 1 bis 5 Kohlenstoffatomen, einen Alkoxyrest mit 1 bis 5 Kohlenstoffatomen, eine Nitrogruppe, eine Nitrilgruppe oder ein Halogenatom,

und

X im Rest (H) eine Einfachbindung oder einen Rest der Formel $-CH_2-$, $-CH_2-CH_2-$, $-CH(CH_3)-$, $-CH(C_2H_5)-$, $-C(CH_3)_2-$, -CO-, -S-, $-SO_2-$ oder -O-, wobei die Isocyanatreste in (G) in 1,3-, 1,4-, 1,6-, 1,7- oder 2,6-Stellung und die Isocyanatreste in (H) in 4,4', 3,3', 4,3'- oder 4,5'-Stellung angeordnet sind

und/oder

(b) mit Verbindungen umgesetzt wird, die Diisocyanate freisetzen, insbesondere mit Urethanen aus Diisocyanaten der Formeln (F), (G) und/oder (H) und aliphatischen Alkoholen und/oder Phenolen, die ggfs. am aromatischen Kern mit einem oder mehreren Substituenten substituiert sind, insbesondere mit Alkylgruppen und/oder Alkoxygruppen mit 1 bis 5 Kohlenstoffatomen, Halogenatomen, Nitrogruppen und/oder Nitrilgruppen.

**12.** Verfahren nach Anspruch 11, dadurch gekennzeichnet, daß die Diisocyanate zur Schmelze des Copolyesters zugegeben oder vor dem Aufheizen mit dem festen Copolyester gemischt werden.

**13.** Verfahren nach Anspruch 11 bis 13, dadurch gekennzeichnet, daß die Diisocyanate einer Menge von 0,5 bis 10 Molanteilen in %, bezogen auf die eingesetzte Acyloxybenzoesäure, zum Copolyester zugegeben werden.

**14.** Verfahren nach den Ansprüchen 11 bis 13, dadurch gekennzeichnet, daß die Diisocyanate nach der acidolytischen Spaltung des aus Resten der Formel (A) aufgebauten Polyesters und/oder nach 1 bis 300 min und vorzugsweise 150 bis 240 min Kondensation unter Vakuum und Rühren zum Copolyester zugegeben werden.

**15.** Verfahren nach den Ansprüchen 11 bis 14, dadurch gekennzeichnet, daß die Diisocyanate bei Temperaturen von 270 bis 300 °C und im Druckbereich von 106 bis 6,66 • $10^{-3}$ kPa, vorzugsweise bei 101 kPa, unter Stickstoff oder Edelgasatmosphäre während 0,1 bis 50 min und vorzugsweise während 0,5 bis 5 min zur Copolyesterschmelze zugesetzt werden.

**16.** Verfahren nach den Ansprüchen 11 bis 15, dadurch gekennzeichnet, daß die Diisocyanate in fester oder geschmolzener Form oder in einem inerten Lösungsmittel gelöst zum Copolyester gegeben werden.

**17.** Verfahren nach den Ansprüchen 11 bis 16, dadurch gekennzeichnet, daß nach dem Zusatz der Diisocyante noch 1 bis 60 min und vorzugsweise 30 min bei Temperaturen von 260 bis 320 °C und vorzugsweise von 275 bis 300 °C im Druckbereich von 106 bis 6,66 • $10^{-3}$ kPa und vorzugsweise unter einem verminderten Druck von 133 bis 6,66 Pa nachgerührt wird.

**18.** Verfahren nach den Ansprüchen 11 bis 14 und 16, dadurch gekennzeichnet, daß die Reaktion zwischen dem Copolyester und den Diisocyanaten in einem Extruder, vorzugsweise mit Entgasungseinrichtung, während einer Verweilzeit im Extruder von 1 bis 30 min und vorzugsweise 5 bis 10 min unter anschließender Entgasung im Vakuum von 13300 bis 133 Pa durchgeführt wird.

**19.** Verfahren nach den Ansprüchen 11 bis 14, 16 und 18, dadurch gekennzeichnet, daß die Diisocyanate während der Extrusion über eine Dosiereinrichtung zur Copolyesterschmelze zugegeben werden.

**20.** Verfahren nach den Ansprüchen 11 bis 19, dadurch gekennzeichnet, daß die Isocyanatreste in (F) in meta- oder para-Stellung zueinander angeordnet sind.

Europäisches Patentamt

# EUROPÄISCHER RECHERCHENBERICHT

Nummer der Anmeldung

**EP 90 11 4888**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 030 904 (RHONE-POULENC)<br>– – – | | C 08 G 69/44 |
| A | FR-A-2 096 287 (MONSANTO)<br>– – – | | |
| A | FR-A-1 416 456 (GENERAL MILLS)<br>– – – – – | | |

| RECHERCHIERTE SACHGEBIETE (Int. Cl.5) |
|---|
| C 08 G |

Der vorliegende Recherchenbericht wurde für alle Patentansprüche erstellt

| Recherchenort | Abschlußdatum der Recherche | Prüfer |
|---|---|---|
| Den Haag | 08 April 91 | LEROY ALAIN |

KATEGORIE DER GENANNTEN DOKUMENTE
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus anderen Gründen angeführtes Dokument
- & : Mitglied der gleichen Patentfamilie, übereinstimmendes Dokument